(19) Europäisches Patentamt / European Patent Office / Office européen des brevets

(11) **EP 3 094 393 B1**

(12) **FASCICULE DE BREVET EUROPEEN**

(45) Date de publication et mention
de la délivrance du brevet:
**10.01.2018 Bulletin 2018/02**

(21) Numéro de dépôt: **14814976.8**

(22) Date de dépôt: **27.11.2014**

(51) Int Cl.:
*B01D 21/28* (2006.01)       *B01F 3/04* (2006.01)
*C02F 1/24* (2006.01)        *C02F 11/14* (2006.01)
*B01F 5/02* (2006.01)        *C02F 1/20* (2006.01)
*C02F 1/52* (2006.01)        *C02F 1/56* (2006.01)
*C02F 1/74* (2006.01)        *C02F 11/12* (2006.01)

(86) Numéro de dépôt international:
**PCT/FR2014/053063**

(87) Numéro de publication internationale:
**WO 2015/079175 (04.06.2015 Gazette 2015/22)**

(54) **PROCEDE ET DISPOSITIF DE TRAITEMENT DE BOUES LIQUIDES, ET GALETTES DE BOUES OBTENUES AVEC UN TEL PROCEDE**

VERFAHREN UND VORRICHTUNG ZUR BEHANDLUNG VON FLÜSSIGEM SCHLAMM UND DURCH BESAGTES VERFAHREN GEWONNENE FILTERKUCHEN

METHOD AND DEVICE FOR TREATING LIQUID SLUDGE AND FILTER CAKES OBTAINED BY SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2013 FR 1361706**
**06.12.2013 FR 1302857**

(43) Date de publication de la demande:
**23.11.2016 Bulletin 2016/47**

(73) Titulaire: **Orege**
**78117 Toussus-le-Noble (FR)**

(72) Inventeurs:
• **CAPEAU, Patrice**
**F-13013 Marseille - 13eme arrondissement (FR)**

• **GENDROT, Pascal**
**F-78350 Jouy en Josas (FR)**

(74) Mandataire: **Benech, Frédéric**
**Cabinet Benech**
**15, rue d'Astorg**
**75008 Paris (FR)**

(56) Documents cités:
**FR-A1- 2 966 818     US-A1- 2008 047 903**

Remarques:
Le dossier contient des informations techniques présentées postérieurement au dépôt de la demande et ne figurant pas dans le présent fascicule.

**Description**

La présente invention concerne un procédé de traitement de boue liquide par injection d'air dans un flux de boue.

Elle concerne également un dispositif de traitement des boues liquides mettant en oeuvre un tel procédé et les galettes de boues obtenues avec ce dernier.

L'invention trouve une application particulièrement importante bien que non exclusive dans le domaine de l'épaississement et/ou de la réduction de volume de boues issues d'un traitement d'eau et/ou accumulées dans des bassins de décantation d'eaux industrielles.

On connaît déjà des épaississeurs de boues (FR 2 729 383) permettant d'améliorer la siccité de boues compactes grâce à des racleurs mécaniques se déplaçant sur le fond perméable de cuves de stockage.

De tels dispositifs comportent des risques de colmatage qui nécessitent des moyens de décolmatage, et présentent les fragilités des appareillages mécaniques.

On connaît aussi des procédés d'épaississement de boues issues de traitement d'eau par floculation/décantation nécessitant un dégazage superficiel, l'injection d'un réactif de refloculation dans les boues et enfin un épaississement dans au moins un épaississeur lamellaire. Ici encore, l'épaississement est prévu mécaniquement et ne peut éviter les colmatages fréquents.

On connaît aussi des systèmes de tables d'égouttage qui présentent cependant des contraintes d'exploitation importantes, et nécessitent des installations de taille considérables.

Il est également connu des systèmes d'épaississement mécaniques de type tambours rotatifs.

Il s'agit là de systèmes robustes mais limités au niveau des résultats, car ils ne permettent pas d'attendre des épaississements supérieurs à 30 à 40 g/l de MS.

On connaît aussi des systèmes d'épaississement statiques formés par des bacs de décantation.

En cas d'épaississement statique, les temps de séjours sont cependant considérables et engendrent malheureusement des évolutions anaérobies des boues provoquant des odeurs nauséabondes et une augmentation du caractère colloïdal desdites boues.

On connaît également (FR 2 966 818) un procédé de dessiccation de boue par injection d'air dans un flux de boue, dont l'efficacité peut encore être améliorée.

La présente invention vise à fournir un procédé et un dispositif répondant mieux que ceux antérieurement connus aux exigences de la pratique, notamment en ce qu'elle n'utilise pas de systèmes mécaniques susceptibles de se gripper ou encore des systèmes engendrant une modification structurelle des boues à traiter, mais des systèmes hydrauliques, ainsi que des réactifs peu couteux (air comprimé ou surpressé, ou floculant classique), et ce tout en permettant une décontamination des boues, de façon rapide, l'utilisation du procédé d'épaississement selon l'invention ne nécessitant que quelques secondes ou minutes.

Pour ce faire, l'invention part du principe d'un traitement et/ou épaississement en continu ou semi-continu (par batch alternatif) d'une boue, dans lequel on alimente avec la boue une enceinte en flux continu en y injectant simultanément de l'air avec un important débit (plusieurs dizaines, voire centaines de $Nm^3/h$) entraînant des vitesses V de l'émulsion obtenue importantes à l'emplacement de la rencontre entre l'air et la boue (V > 10m/s) (par exemple 50m/s), l'émulsion étant formée d'une multitude de gouttelettes de boues dans le fort courant d'air, on crée une perte de charge déterminée dans l'émulsion par rétrécissement dans et/ou en sortie de l'enceinte, on injecte un floculant après un tel rétrécissement, on dégaze ladite émulsion à la pression atmosphérique et on récupère l'ensemble dans un dispositif de filtration ou de décantation.

Avantageusement on concentre également rapidement en aval les boues en ligne dans un récipient à déversoir.

Dans ce but l'invention propose notamment un procédé de traitement et de conditionnement de boues liquides, dans lequel on crée une première émulsion de boue dans un récipient en ligne pressurisé alimenté par la boue en continu à un premier débit Q (m3/h), par choc de la boue avec de l'air injecté dans le récipient à un débit Q'(Nm3/h), avec Q' > 5Q, puis on l'évacue à la sortie du récipient via un organe générant une perte de charge avant récupération de l'émulsion et dégazage puis on filtre ou on laisse décanter les matières en suspension de l'émulsion ainsi obtenue en les séparant de la partie liquide que l'on vide en continu, caractérisé en ce que on injecte la boue et l'air dans une première zone du récipient, puis on évacue l'émulsion ainsi formée vers une deuxième zone du récipient s'étendant sur une première longueur déterminée $L_1$, l'injection d'air et de boue dans la première zone et la longueur $L_1$ étant propres à constituer ladite première émulsion formée de gouttes de boue dans l'air,

en ce que l'évacuation se fait dans une enceinte s'étendant sur une seconde longueur déterminée $L_2$, dans laquelle on injecte au moins un floculant, pour obtenir dans ladite enceinte une deuxième émulsion d'air dans la boue coagulée et floculée,

et en ce qu'on dégaze ladite deuxième émulsion au moins en partie par mise à l'atmosphère de l'enceinte.

Avantageusement la première zone est un petit volume notamment confiné entre deux parois latérales (comme dans un venturi ou une restriction de tuyauterie par exemple). Par semi continu, on entend par batches successifs, que l'on substitue les uns à la suite des autres à la volée, ou sensiblement sans s'arrêter, pour permettre le traitement en continu ou semi continu, autorisant dès lors une excellente cadence.

On observe ici que la première émulsion est plutôt une émulsion de boue. On entend par là une émulsion où la boue est en phase dispersée dans l'air qui est la phase continue.

La deuxième émulsion est par contre plutôt une émulsion de gaz dans la boue, le floculant ayant bloqué des bulles de gaz micro et millimétriques au sein des flocons de boue.

La taille particulièrement réduite de la zone d'injection (par exemple 0,01 m$^3$) va autoriser un excellent mélange boue/air.

Il y a en effet à cet endroit une zone de grande vitesse, entrainant des chocs cinétiques, qui permet à la boue d'éclater dans le gaz. L'émulsion ainsi obtenue passe ensuite dans la deuxième zone du récipient qui s'étend sur une certaine longueur.

A noter que première et deuxième zones peuvent être séparées par une restriction (un venturi et/ou un orifice) formant les deux zones en deux chambres séparées.

Cette longueur entraine nécessairement, même s'il est léger, un gradient de dépression vers la sortie du récipient qui se révèle permettre une agglomération, coagulation, compaction de la boue préparant alors la première émulsion ainsi modifiée au traitement qui suit.

Avantageusement la première longueur déterminée $L_1$ est supérieure à cinquante centimètres, par exemple supérieure à 1 m, par exemple 1 m 50.

Ainsi on réalise une séquence pression/dépression qui de façon surprenante crée un état de la matière (émulsion) permettant d'obtenir in fine un gain de siccité supérieur.

En particulier la pression amène une énergie capable de déstabiliser et casser les liaisons électrostatiques (type coulombiennes) ou dipolaire (type Van des Waals) et faire ainsi sortir l'eau des fractions organiques.

La dispersion qui suit produit quant à elle un mouvement d'accélération des boues et une expansion ou étirement vers la zone de moindre pression poursuivant l'effet de déstabilisation et déstructuration des colloïdes et un effet de cassage des liaisons.

Eventuellement et dans des modes de réalisation avantageux on réitère à nouveau des séquences de compression puis dépression... pour prolonger/simplifier/produire les effets recherchés.

Ici l'effet technique obtenu par l'invention est avant tout lié à la porosification de la boue obtenue grâce au choc de la boue avec l'air dans les conditions de dimensions et de zones actives du réacteur, puis de la perte de charge entre récipient et enceinte qui vont être dimensionnées plus précisément et naturellement par l'homme du métier en fonction de l'effluent traité, des débits mis en oeuvre et du floculant utilisé.

On introduit de l'air dans le flux de boue en provoquant donc un choc entre l'air et la boue puis des différentiels de pression par exemple comme on va le voir par un système venturi avec succion d'air.

Avantageusement la deuxième longueur déterminée $L_2$ est quant à elle supérieure à 1 m, plus avantageusement supérieure à 2 m ou 3 m, par exemple 5 m ou plus.

Dans des modes de réalisation avantageux, on a de plus et/ou par ailleurs recours à l'une et/ou à l'autre des dispositions suivantes :

- la pression moyenne P dans le récipient est telle que 1, 5 bars < P < 10 bars et Q' est tel que $10\,Q \leq Q' \leq 100\,Q$, par exemple Q'>50 Q ;
- on dégaze fortement l'émulsion à la sortie du récipient, par exemple à l'intérieur d'une chambre de dégazage munie de moyen de brassage ;
- le récipient en ligne est une colonne de diamètre moyen $\underline{d}$ et de hauteur $H \geq 10\,\underline{d}$, la boue étant introduite en partie basse de la colonne dans le lit gazeux créé par l'air injecté au niveau de ladite alimentation en boue (par exemple en dessus ou en dessous) ;
- on projette la boue liquide dans la colonne sur une paroi ou un écran interne du récipient pour améliorer l'éclatement de celle-ci dans le flux gazeux. Pour ce faire la sortie dans le récipient de l'alimentation en boue est avantageusement située en vis à vis d'une paroi et/ou de l'écran, à une petite distance, par exemple inférieure à 5 cm ;
- on introduit la boue en partie basse du récipient via un mélangeur statique. Un mélangeur statique est un système connu en lui-même non alimenté en énergie, situé dans le tube d'alimentation de boue et comprenant par exemple des lames de brassage statique et/ou des diaphragmes obliques etc... ;
- le floculant est un polymère injecté en sortie immédiate du récipient, avant la mise à l'atmosphère. C'est par exemple un floculant organique de type cationique ;
- on introduit en amont du récipient dans le flux de boue au moins un réactif pris parmi le sable, le carbonate de calcium, la chaux éteinte, les réactifs d'oxydation et/ou les réactifs d'aide à la coagulation ;
- on introduit en aval du récipient au moins un réactif pris parmi le sable, le carbonate de calcium, la chaux éteinte, les réactifs d'oxydation et/ou les réactifs d'aide à la coagulation ;
- l'enceinte est tubulaire de section moyenne de passage équivalente à celle du récipient ;
- l'enceinte tubulaire comprend au moins un élément générateur d'une perte de charge en aval de la sortie du récipient, à la sortie duquel on injecte le floculant ;
- l'enceinte tubulaire comprend au moins un deuxième élément générateur d'une perte de charge en amont du premier élément générateur, à la sortie duquel on introduit au moins un réactif et/ ou de l'air ;
- le ou les éléments générateurs de perte de charge sont des venturis ;
- on effectue une concentration rapide et/ou sensiblement instantanée (quelques secondes voire minutes, par exemple sept à dix minutes) de boues par flottation/tassement de l'émulsion floculée dans une capacité faisant office de concentrateur, la boue concentrée étant évacuée en continue par exemple par surverse.

De façon surprenante, les volumes d'air importants insufflés ont en fait engendré une boue mélangée à de très grosses bulles d'air (> à plusieurs millimètres) qui augmente considérablement les vitesses de remontée des boues lors de la flottation (vitesse ascensionnelle observée multipliée par un facteur dix, voir plus).

Avantageusement, en colmatant plus ou moins la surface de la capacité, il est possible de réguler (en fonction des débits d'air et de boues utilisés) l'épaisseur de la couche flottante, qui peut alors et de plus se tasser du fait de son poids, permettant d'obtenir des concentrations de 100 à 120 g/l de MS, sachant que la qualité et la transparence de l'eau obtenue en dessous de la boue floculée reste toujours exceptionnelle (DCO inférieure à 200 mg/l, voir 100 mg/l dans le cas de boues biologiques) ;

- on effectue un traitement complémentaire des boues en aval de l'enceinte tubulaire par centrifugation, filtration et/ou pressage ;
- l'air injecté est chauffé et/ou mélangé à de la vapeur d'eau.
- l'air est injecté à contre flux de la boue, ou pour former un écoulement hélicoïdal éventuellement à contre-courant du flux de boue, ou injecté à angle droit avec le flux de boue, ou encore dans le sens du flux de boue.

L'invention propose aussi un dispositif mettant en oeuvre le procédé tel que décrit ci-dessus.

Elle propose par ailleurs un dispositif de traitement et de conditionnement de boues liquides comportant un récipient en ligne, des moyens d'alimentation en boue dudit récipient en continu à un premier débit Q (m3/h), des moyens d'alimentation dudit récipient en air à un débit Q'(Nm3/h), avec Q' > 5Q, et des moyens de filtration et/ou de décantation de l'émulsion ainsi floculée agencés pour séparer la partie liquide des matières en suspension et la récupérer en continu, caractérisé en ce que les moyens d'alimentation en boue et en air du récipient sont agencés pour injecter la boue et l'air dans une première zone du récipient, puis pour véhiculer le mélange sur une première longueur $L_1$ pour former une première émulsion de gouttes de boue dans l'air, en ce que il comprend une enceinte d'évacuation de la première émulsion obtenue dans le récipient, l'enceinte étant tubulaire s'étendant sur une longueur déterminée $L_2$, comprenant des moyens de mise à l'atmosphère et des moyens d'injection d'au moins un floculant dans ladite enceinte tubulaire en amont par rapport à ladite mise à l'atmosphère, de façon à former une deuxième émulsion d'air dans la boue coagulée et floculée.

Par longueur $L_1$ ou $L_2$ déterminée, il faut entendre une distance supérieure à 0,5 m, avantageusement 1 m, par exemple 2 m, 3 m et avantageusement supérieure à 5 m, par exemple 10 m.

Avantageusement la première zone du récipient est d'un petit volume inférieur à 0,05 m$^3$ notamment confiné entre deux parois latérales (petite section) (entre lesquelles la boue est donc introduite pour sortir vers la deuxième zone de plus grand volume et/ou de section plus large).

Le petit volume est par exemple formé par un venturi et/ou fait partie de moyens d'injection ou d'un dispositif d'injection simultané d'air et de boue.

Avantageusement le récipient en ligne est une colonne de diamètre moyen $\underline{d}$ et de hauteur H ≥ 10 $\underline{d}$, la boue étant introduite en partie basse de la colonne dans le lit gazeux créé par l'air injecté au niveau, par exemple un peu en dessous ou un peu au-dessus (un ou quelques centimètres) de ladite alimentation en boue.

Egalement avantageusement la colonne comporte de plus un écran interne disposé à la sortie des moyens d'injection dans la colonne, pour éclatement du jet de boue.

Encore avantageusement le dispositif comprend un mélangeur statique de la boue en amont du récipient.

Avantageusement l'enceinte comprend au moins un élément générateur de perte de charge, par exemple un venturi.

Dans un mode de réalisation avantageux l'invention propose de plus une chambre de dégazage munie de moyens de brassage située en aval du récipient.

Avantageusement il est de plus prévu une capacité à la sortie ou en aval de l'enceinte faisant office de concentrateur agencé pour permettre la flottation de la boue floculée sur une hauteur déterminée (dans une fourchette déterminée par exemple entre 20 cm et 1 m d'épaisseur de boue), muni de moyens d'évacuation en continu de la boue par surverse.

L'invention propose aussi une galette de boue solidifiée obtenue à partir d'une boue organique de porosité égale ou similaire à celle de la pierre ponce. Par égale ou similaire on entend une porosité $\phi = \dfrac{V_{pores}}{V_{Total}}$ égale à $\pm$ 20 %, avantageusement $\pm$ 10%.

La porosité est par exemple calculée de façon connue en elle-même sur des échantillons préparés après extraction des fluides de l'échantillon avec par exemple un extracteur connu sous la dénomination Soxhlet ou par distillation sous vide. On mesure le volume total V total par exemple par mensuration, puis le volume solide par exemple avec un pycnomètre.

La porosité de la pierre ponce est quand-à-elle de l'ordre de 85 % ($\pm$ 5 %).

Avantageusement, la masse volumique de la galette est par exemple comprise entre 0,5 et 0,9 g/cm$^3$.

Avantageusement la galette est obtenue par le procédé et/ou le dispositif tel que décrits ci-avant.

L'invention sera mieux comprise à la lecture de la description qui suit de modes de réalisation donnés ci-après à titre d'exemples non limitatifs. La description se réfère aux dessins qui l'accompagnent dans desquels :

La figure 1 est un schéma illustrant un premier mode de réalisation d'un dispositif mettant un oeuvre le procédé selon l'invention.

La figure 2 est un schéma illustrant un deuxième mode de réalisation d'un dispositif selon l'invention.

La figure 3 est un schéma de fonctionnement d'un troisième mode de réalisation d'un dispositif selon l'invention.

La figure 4 montre schématiquement un quatrième mode de réalisation selon l'invention avec dégazeur et concentrateur.

Les figures 5A, 5B et 5C sont des vues de face, latérale et de dessus d'un dispositif selon un cinquième mode de réalisation de l'invention.

La figure 6 est une vue latérale partielle d'un dispositif selon un sixième mode de réalisation de l'invention.

Les figures 7A, 7B et 7C sont respectivement une vue de dessus et des vues latérales en coupe du concentrateur de la figure 5.

Les figures 8A et 8B sont des vues de dessus et en coupe latérale d'un concentrateur selon un autre mode de réalisation de l'invention.

La figure 9 est une vue en perspective (et en transparence) d'un autre mode de réalisation de concentrateur/flottateur utilisable avec l'invention.

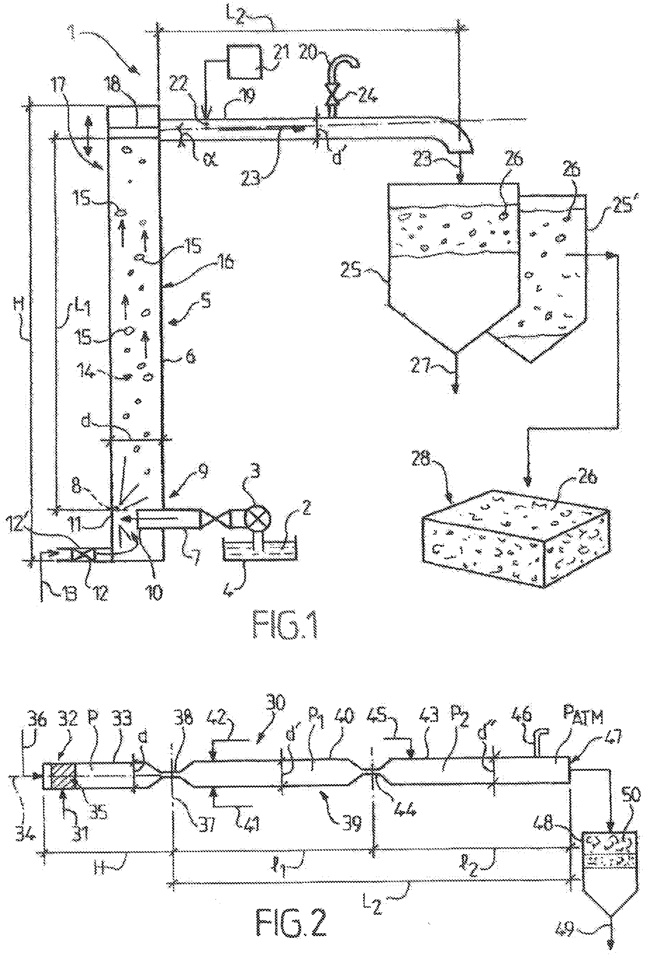

La figure 1 montre un dispositif 1 de traitement et de conditionnement de boues liquides 2 par exemple pompées par une pompe 3 à partir d'un réservoir 4 de stockage des boues par exemple contaminées, à forte teneur organique et donc génératrices notamment d'ammoniac (NH3).

Le dispositif comprend un récipient 5 formé par une colonne tubulaire 6 de diamètre d par exemple compris entre 30 cm et 50 cm.

La boue est injectée à un débit Q par exemple de 20m$^3$/h par une tubulure pénétrante 7 (munie de moyens de mélange statique non représentés comme une vis hélicoïdale) dans une première zone 8 située dans la partie basse 9 de la colonne 6, de petit volume par exemple 10 l. Le volume de la zone 8 est délimité par la partie de l'enceinte située dans le prolongement volumétrique de l'extrémité 10 de la tubulure pénétrante 7 et par la paroi en vis à vis 11 par exemple cylindrique, et située à 5 cm de ladite extrémité 10.

Le dispositif 1 comprend également une alimentation 12 en air 13 à un débit Q' (Nm$^3$/h) de l'enceinte 6 par exemple en dessous de l'alimentation en boue (tubulure 7). Mais l'air peut également être alimenté à contre flux du flux de boue, par exemple par le biais d'une rampe interne hélicoïdale 12'.

Il est rappelé par ailleurs que la valeur des débits gazeux est classiquement donnée en Nm$^3$/h (Normo-mètre cubes/h), le volume (en Nm$^3$/h) étant ici considéré à sa valeur rapportée à une pression de 1 bar, une température de 20° C et 0 % d'humidité comme cela est naturellement admis et compris par l'homme du métier, ingénieur dans le domaine du génie chimique.

L'air est en surpression P' par rapport à la pression interne moyenne de la colonne 6 et est injecté à un débit Q' très supérieur au débit de boue, par exemple 500 Nm$^3$/h.

La rencontre de l'air et de la boue crée une première émulsion de boue 14, avec éclatement de la boue (gouttes 15 dispersées) dans l'air, émulsion qui remonte ensuite dans la colonne de hauteur totale H, dans une deuxième zone 16 d'une première longueur $L_1$ avant d'atteindre le haut 17 de la colonne qui comporte un organe de sortie 18, par exemple une soupape et/ou une vanne de régulation autorisant une surpression permanente de la première émulsion à l'intérieur de l'enceinte, par exemple à une pression moyenne P de l'ordre de 1,5 bar absolu, avec un $\Delta$P entre le bas 9 et le haut 17 de la colonne de quelques millibars.

Selon le mode de réalisation de l'invention décrit ici, le dispositif 1 comprend également une enceinte tubulaire 19 par exemple de diamètre d'tel que ½ d $\leq$ d' $\leq$ d d'évacuation de la première émulsion sur une deuxième longueur déterminée $L_2$ par exemple de 3 m.

L'enceinte 19 comprend un évent 20 de mise à l'atmosphère de son contenu par exemple à une distance $L'_2$ = ¾ $L_2$ de la sortie de la colonne 6.

En amont de cet évent, le dispositif 1 comprend des moyens 21 connus en eux-mêmes (pompe doseuse, récipient de préparation etc...) d'introduction dans l'enceinte 19, d'un floculant 22, situés par exemple à proximité de l'enceinte (par exemple à 5 cm de l'organe 18), par exemple formé par un polymère de type connu, adapté par l'homme du métier en fonction des boues traitées.

Il s'ensuit la formation d'une deuxième émulsion 23, cette fois-ci de gaz dans la boue floculée.

L'enceinte tubulaire permet un écoulement initialement en surpression puis gravitaire ou sensiblement gravitaire (pente $\alpha$) une fois la mise à l'atmosphère de l'émulsion opérée par l'évent 20.

Une vanne 24 permet éventuellement de réguler cette mise à l'atmosphère.

L'émulsion 23 tombe alors dans des réservoirs, ici des sacs filtrants 25, 25' permettant de récupérer la boue déshydratée 26 qui flotte en surface, l'eau claire 27 étant récupérée en partie basse. Les galettes 28 de boue 26 extraites des sacs, sont alors stockées et/ou épandues. De façon étonnante, elles n'ont pas d'odeur ou une odeur d'humus.

L'eau séparée a bénéficié du même traitement d'ordre physico-chimique que la boue. L'air n'y est pas piégé, mais son potentiel redox s'est élevé, les fractions colloïdales étant fixées à la MO laissant une eau transparente, de charge en MES et en matière organique très faible. Par exemple, on obtient une turbidité de 5 à 10 NTU alors que avec un filtre bande on obtient une eau beaucoup plus turbide, de 25 à 35 NTU.

Le filtrant est également moins visqueux que dans l'art antérieur, à qualité de boue initiale égale. Une mesure du CST donne ici de l'ordre de 5 s, alors que l'art antérieur obtient de l'ordre de 10 s.

La DCO est également descendue à moins de 100 mg $O_2$/l pour un filtrant de boue biologique et à moins de 200 mg/l pour un filtrant de boue digérée (pour un filtrant de la même boue obtenu avec une centrifugeuse classique de 1000 à 3000 mg$O_2$/l), ainsi qu'une teneur en MES < 50 ppm pour plus de 1000 ppm avec l'art antérieur à conditions équivalentes.

La figure 2 montre un autre mode de réalisation d'un dispositif 30 selon l'invention, de traitement de boues liquides 31 introduites à une portion d'extrémité 32 d'un récipient 33 allongé autour d'un axe 34 et de hauteur H déterminée, par exemple 1 m.

Le récipient est maintenu à une pression moyenne P par exemple de 2 bars absolus, et est formé par un cylindre de diamètre $\underline{d}$ par exemple de 300 mm.

La boue alimente une zone réduite 35, par exemple de 10 l située à la portion d'extrémité 32 également alimentée au bout du récipient et en amont de l'introduction de la boue par une arrivée d'air 36 par exemple à une pression P' > P, par exemple 3 bars absolus.

L'air est alimenté à très fort débit Q' par exemple 100 Nm$^3$/h, la boue étant quant à elle introduite à un débit Q par exemple de 10 m$^3$/h.

La boue 31 éclate dans l'air qui est en surpression, une légère dépression $\Delta P$ existant entre le récipient à l'arrivée de la boue en 35 et la sortie de l'émulsion de boue en aval 37 du récipient.

A la sortie du récipient 33 existe un venturi 38 et/ou une vanne de régulation générant une perte de charge par exemple de 0,4 bar, l'émulsion de boue étant ici évacuée dans une enceinte tubulaire 39 comprenant une première partie 40 cylindrique de diamètre d' (par exemple d' = $\underline{d}$) qui se trouve à une pression $P_1$ < P, par exemple ici de 1,6 bars (dans l'exemple pris), dans laquelle peut être injecté, en aval du venturi, et à proximité de celui-ci (par exemple à 10 cm pour permettre un bon brassage), un réactif en 41, et/ou à nouveau de l'air (piquage 42).

Dans ce mode de réalisation, l'enceinte tubulaire comprend également une deuxième partie cylindrique 43, séparée de la première partie 40 par un deuxième venturi 44, ladite deuxième partie étant de diamètre d" avec par exemple d' = d" = d.

En aval du venturi 44, et à proximité de celui-ci (1 à 10 cm) est prévu une alimentation 45 en floculant, avec des moyens connus en eux-mêmes (pompe doseuse etc...), et un évent 46 de mise à l'atmosphère et/ou une sortie 47 de boue ouverte à l'atmosphère, la pression $P_2$ dans cette deuxième partie étant donc très rapidement portée à la pression atmosphérique , par exemple de 1,3 bar à la sortie du venturi pour passer rapidement à 1 bars = 1 atmosphère à la sortie 47, l'émulsion devenant après l'ajout du floculant une émulsion d'air dans les flocons de boues, qui s'écoulent gravitairement sur la fin.

La longueur totale de l'enceinte $L_2 \approx l_1 + l_2$, est par exemple de 10 m, avec $l_1$ = 3 m et $l_2$ = 7 m, mais d'autres valeurs sont possibles, la proportion entre $l_1$ et $l_2$ étant en général, mais non limitativement telle que $l_1 < l_2$.

Le dispositif 30 comprend de plus un filtre 48 et/ou un bac de décantation pour évacuation de l'eau épurée 49 en partie basse et de la boue déshydratée 50 en partie haute.

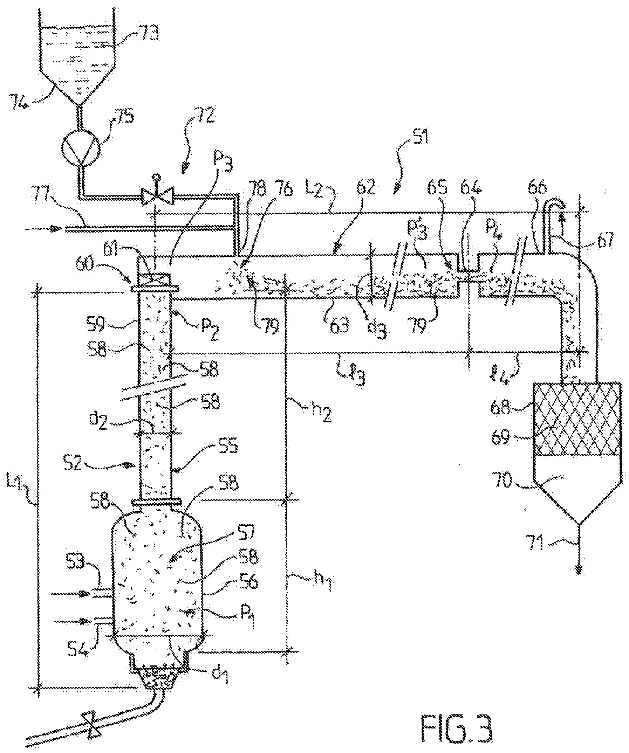

On a représenté sur la figure 3 un troisième mode de réalisation d'un dispositif 51 selon l'invention.

Le dispositif 51 comprend un récipient 52 alimenté par un piquage 53 en partie basse, en boue liquide, et en dessous de ce piquage 53, alimenté en air comprimé à fort débit par un deuxième piquage 54.

Plus précisément le récipient est formé par une colonne verticale 55 comprenant une première partie formant un réservoir 56 de mélange/brassage très violent de l'air et de la boue, de petites dimensions par exemple cylindrique

de hauteur $h_1$ = 50 cm et de diamètre $d_1$ 30 cm soit un volume de l'ordre de 35 l, permettant d'obtenir la première émulsion 57 de gouttelettes 58 de boue cassée.

Cette émulsion de gouttes dans un fort flux ascendant d'air en pression pénètre ensuite dans une conduite cylindrique 59, prolongeant le réservoir 56, de plus petit diamètre $d_2 < d_1$ par exemple de 10 cm de diamètre et qui s'étend sur une longueur $h_2$ par exemple de 1 m (avec $L_1 = h_1 + h_2$).

Dans cette colonne d'air, le flux gazeux effectue un arrachage (stripping en langue anglo-saxonne) des gaz contenus et/ou issus des boues et notamment de l'ammoniac NH3, réalisant de façon étonnante et dépendante des conditions de fonctionnement et des boues organiques traitées, une élimination quasi complète des gaz indésirables (< quelques ppm) piégés dans les boues.

La longueur $l_2$ est avantageusement dimensionnée pour ce faire par l'homme du métier.

En haut 60 de l'enceinte, une vanne 61 de régulation et/ou une soupape est prévue, d'évacuation vers une enceinte tubulaire 62.

La pression de l'émulsion 57 passe de $P_1$ (par exemple 3 bars) dans le réservoir initial 56, à $P_2$ (2,890 bars) un peu inférieur à $P_1$ en partie haute de la colonne 59 du récipient, au niveau de la vanne 61, avec $\Delta P = P_2 - P_1 =$ quelques millibars, puis à la sortie de la vanne à $P_3$ = 2 bars (du fait de la perte de charge de la vanne).

Plus précisément l'enceinte 62 comprend un premier tronçon 63 de longueur $l_3$ par exemple 5 m, qui se termine par un venturi 64 faisant passer la pression $P'_3 < P_3$ à l'extrémité 65 du premier tronçon à une pression $P_4$ dans un deuxième tronçon 66 de l'enceinte en pente gravitaire, muni d'un évent 67, le tronçon 66 étant de longueur $l_4$ par exemple 1 m, avec $L_2 = l_3 + l_4$.

Le tronçon 66 est connecté au filtre 68 de séparation des matières en suspension 69 de la partie liquide 70, que l'on vide en continu en 71, de façon connue en elle-même.

L'enceinte comprend des moyens 72 d'alimentation en floculant 73 à partir d'un réservoir 74 de préparation par brassage et mélange. Une pompe doseuse 75 amène le floculant dans l'émulsion de boue qui sort du récipient 52 au niveau de la sortie de la vanne 61, ou à proximité immédiate (i.e. quelques cm) dans une zone 76 assez perturbée du fait de la perte de charge générée par ladite vanne 61. $P_3$ est ici et par exemple séquentiellement passé de $P_2 \approx 2$ bars à $P_3$ = 1,4 bar, $P_4$ étant quant à elle à la pression atmosphérique, ou sensiblement à la pression atmosphérique du fait de l'évent 67.

Dans ce mode de réalisation, il a également été prévu une arrivée d'air complémentaire 77, injectée par exemple séquentiellement avec le floculant par le piquage 78, ou en parallèle.

L'émulsion 79 à la sortie du traitement avec le floculant devient une émulsion d'air dans la boue floculée épaissie.

Les deux tronçons 63 et 66 sont par exemple cylindriques de même diamètre $d_3$ par exemple égal au diamètre moyen du récipient par exemple $\dfrac{d_1 + d_2}{2}$.

Pour 10 m$^3$/h de boue liquide, un flux d'air de 60 Nm$^3$/h minimum, et ce quelque que soit le mode d'injection, le récipient présentant une section de 200 mm pour une hauteur de 5 m, 10 m, 30 m ou plus, on observe un effet de stripping (en langue anglo-saxonne) (arrachage des gaz piégés) très fort, l'air étant intimement mêlé à la boue.

Concernant le floculant, on utilisera de préférence un polymère par exemple cationique.

Exemple, pour une boue contenant 7g/l de MS, on utilise 50 g de polymère brut, par exemple préparé à 5g/l soit une injection de 10 l de solution par m$^3$ de boue. L'injection s'effectue en sortie immédiate de la colonne du récipient.

Les boues s'évacuent ensuite par exemple gravitairement via une tubulure (non représentée) éventée dans un sac filtrant (non représenté) et la boue épaissie étant quant à elle récupérée par exemple par pelletage pour constituer des blocs épaissis, d'un facteur 50 par exemple par rapport à la boue liquide en entrée ($\tau$ de MS multiplié par 50 avant égouttage dans le sac filtrant).

En variante, on peut ajouter un réactif améliorant les chocs entre les particules de boues. Il peut par exemple être utilisé à hauteur de 10 %, 5 %, 1 % du taux de MS des boues, comme vu précédemment.

Ce réactif est par exemple du sable, du carbonate de calcium, de la chaux éteinte etc... Il est introduit en amont de la colonne par exemple au sein d'une cuve de mélange avec la boue liquide (non représenté).

Il peut également être apporté des réactifs d'oxydations.

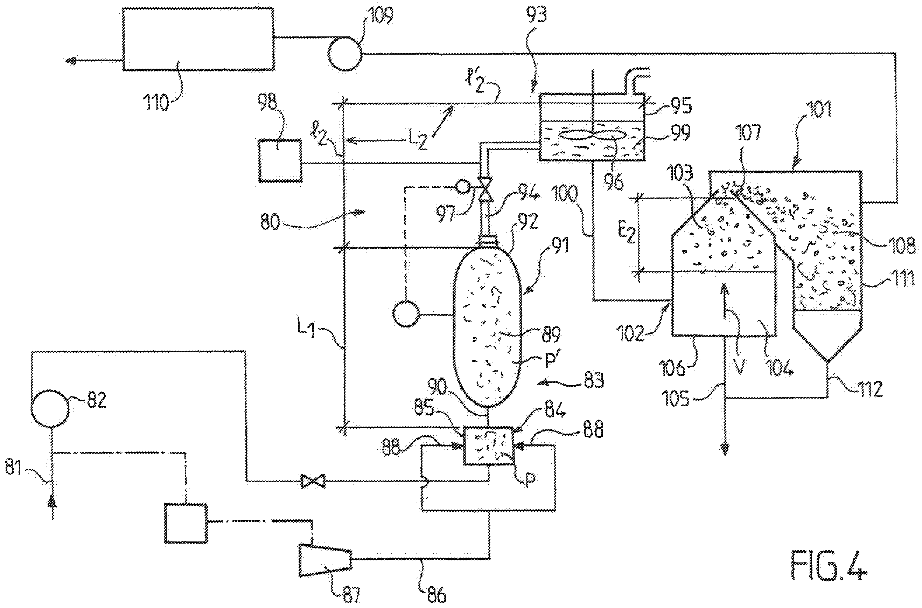

La figure 4 montre un dispositif 80 de traitement de boue 81 injectée par une pompe 82 dans un récipient en ligne 83. Le récipient 83 comprend une première zone 84 de petit volume (< 50 l) formée par une première chambre 85 par exemple parallélépipédique ou cylindrique dans laquelle est injecté d'une part la boue par exemple en partie basse à un débit Q par exemple 10 m$^3$/h et d'autre part de l'air comprimé ou surpressé 86, à partir d'un surpresseur 87, à un débit Q' (par exemple 100 Nm$^3$/h) par exemple par le biais de deux piquages latéraux 88 en vis à vis, perpendiculairement au flux de boues pour former une première émulsion air/boue 89.

La chambre 85 est par exemple à une pression P de 5 bars absolus et est reliée par une tubulure 90 de section plus réduite que celle de la chambre, par exemple de moitié (formant de ce fait une restriction entrainant une perte de charge à une deuxième zone 91 formée par une deuxième chambre 92, de forme sensiblement cylindrique, oblongue ou tubulaire par exemple de plus grande section que la chambre 85, par exemple le double de longueur $L_1$, dans laquelle la première émulsion 89 obtenue par le mélange air/boue est à une pression plus faible P', par exemple de 4,5 bars absolus.

Le dispositif comprend une enceinte 93 formée d'un tube 94 terminée par une chambre 95 de dégazage munie de moyens de brassage 96.

Le tube 94 comprend une vanne 97 de restriction, permettant de modifier la pression dans l'enceinte entre sa partie amont et sa partie avale et est muni de moyens 98 d'injections d'un floculant connus en eux-mêmes en aval de la restriction 97, pour former une deuxième émulsion floculée 99 dégazée dans la chambre 95.

La chambre 95 de dégazage est par exemple un réservoir cylindrique de volume suffisant pour évacuer l'air en trop, et alimente gravitairement par une tubulure de sortie 100 un appareil concentrateur ou capacité 101 qui va servir de flottateur.

L'émulsion 99 dégazée arrive en partie intermédiaire basse 102 de l'appareil et se sépare immédiatement en matière solide 103 qui monte en surface et en eau transparente 104 qui s'évacue gravitairement en 105, en continu dans un premier réservoir 106 de forme tronco-cylindrique.

La matière solide 103 s'évacue en partie haute du concentrateur/flottateur 101 par exemple par une goulotte rétrécie 107 qui évacue la matière solide 108 par pompage (pompe 109) vers une unité de centrifugation 110, avec décantation supplémentaire dans un réservoir annexe 111, de l'eau rémanante en 112.

Le réservoir 106 de l'appareil 101 est avantageusement de petite taille (mais pas nécessairement), c'est à dire et par exemple d'un volume correspondant à 1 % du volume de boue véhiculé par heure, par exemple 100 l pour 10 Nm$^3$/h.

Le réservoir est fermé par la goulotte 107 de section réduite ou rétrécie permettant du maintenir une légère surpression au-dessus d'un bar absolu, par exemple 1,2 bars.

Avec l'invention se produit un phénomène de flottation immédiate, totalement inattendu, avec une vitesse ascensionnelle V dans le réservoir de 50 à 250 m/h, très supérieure aux vitesses observées avec l'art antérieur (2 à 20 m/h).

Selon l'invention, on observe un effet de flottation dynamique extraordinaire (qui permet notamment de prévoir un appareil de petite taille).

Par exemple un flottateur de 1 m2 de surface et de volume total de 1 m3 est capable de gérer entre 10 et 13 m3/h de boues et 200 à 250 kg/h de MS et de sortir une boue de 80 à 120 g/l de MS.

Avec l'invention il est possible de laisser un épaississement E du lit de boue jusque plus d'un mètre. La vitesse ascensionnelle de la boue, cumulée à la porosité de la boue, permet également de maintenir la boue en flottation pendant un temps très long (de plusieurs heures si on le souhaite et si on dimensionne le réservoir en conséquence), ce qui a pour effet de permettre l'épaississement du gâteau de boue sans pénaliser la qualité de l'eau sous-jacente.

Au moment de la montée la boue à une densité de 0, 6 à 0,9. La porosité est stable et telle que même après centrifugation en 110, par exemple à 3000 T/min, la boue garde une porosité lui permettant de flotter sur l'eau.

Après avoir suffisamment épaissi la boue dans le réservoir 106, et/ou dans le réservoir annexe 111, en fonction des besoins, elle peut être extraite par raclage, surverse, pompage en continu ou en processus de batch (ici c'est la surverse par la goulotte qui est plus particulièrement décrite).

L'appareil de concentration peut également être une colonne, une cuve simple ou plus complexe muni d'un système de récupération des flottants et d'une sur verse comme cela va maintenant être décrit en référence aux figures suivantes.

A noter qu'en processus batch, il est également possible de laisser épaissir les boues dans un premier appareil pendant qu'un autre est rempli.

Pour une charge massique de 200 à 250 kg/h de matière sèche, on peut par exemple prévoir un appareil de 1m3 et 1m de surface.

La flottation des boues est en effet tellement efficace (c'est la taille des bulles, due à la floculation sur l'émulsion, qui le permet, en comparaison avec un flottateur classique qui pressurise l'air de flottation et ne permet pas une vitesse ascensionnelle aussi forte et une boue aussi consistante), qu'un gâteau épais est obtenu.

Celui-ci forme alors une sorte de bouchon de boue sortant par extrusion par la goulotte 107, en surverse du récipient de décantation.

Cet effet étonnant permet de mettre en oeuvre un récipient de petite taille et capable de fonctionner sans aucune pièce motrice limitant ainsi la consommation énergétique de l'ensemble.

Rappelons que les systèmes de flottation ou d'épaississement classiques donnent des résultats de 30 à 40 g/l maximum, inférieur d'un facteur 3 à ce qui est obtenu avec l'invention.

L'épaississement exceptionnel obtenu aussi rapidement selon un mode de réalisation de l'invention peut avoir de multiples avantages :

Il permet de concentrer les boues biologiques afin de réduire le volume entrant dans des digesteurs.
Il permet de réduire le volume de boues à l'entrée des appareils de séparation comme une centrifugeuse.
Il autorise de faire fonctionner les appareils centrifugeuses et filtres presse dans leur plage de performance optimum et en conséquence d'améliorer fortement, d'au moins 5 à 6% voire 10% la siccité des boues déshydratées.

Améliorer la siccité, conséquence de la concentration préalable par le dispositif et/ou le procédé selon l'invention, permet aussi de soustraire une grande partie de l'eau non liée de la matière à déshydrater et de réduire les temps de marche des appareils.

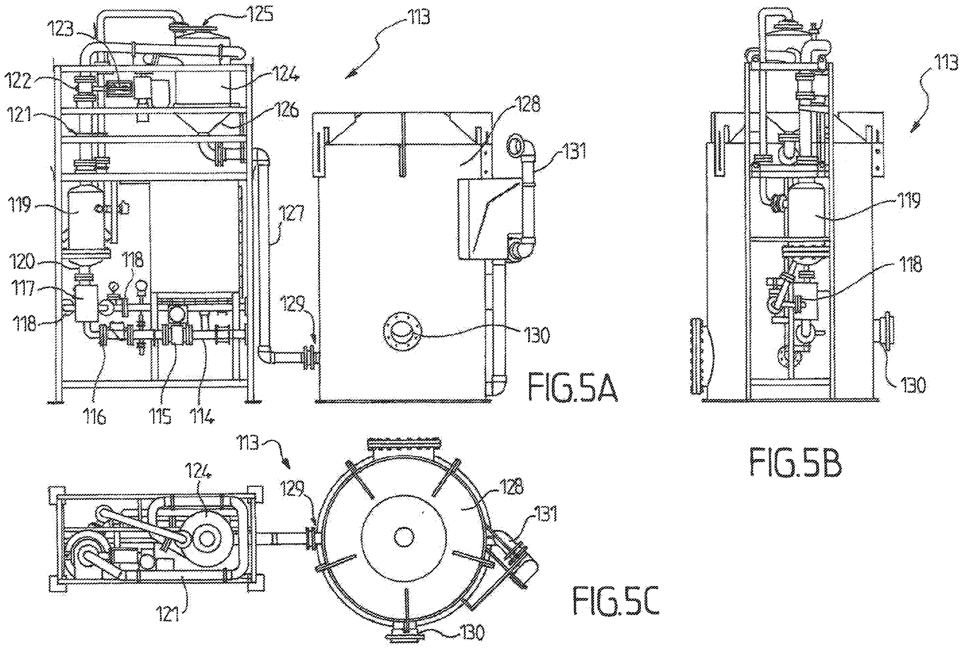

Les figures 5A, 5B et 5C montrent un autre mode de réalisation d'un dispositif 113 de traitement des effluents selon l'invention.

Le dispositif 113 comprend une alimentation en boue, par l'intermédiaire d'une tuyauterie 114 munie d'une vanne de régulation 115 et d'un mélangeur 116, d'une chambre 117 cylindrique de petit volume (par exemple 36 l) en partie inférieure.

La chambre 117 est également alimentée par deux piquages 118 d'alimentation en air comprimé. Elle est connectée en partie haute à une deuxième chambre 119, via une tubulure de jonction 120, ladite deuxième chambre étant cylindrique et de volume par exemple 500 l. Elle est terminée en partie haute par une enceinte tubulaire 121 munie d'un venturi 122, à la sortie duquel sont connectés des moyens 123 d'alimentation en floculant. L'enceinte tubulaire 121 forme un coude et alimente en partie haute un appareil ou chambre 124 dégazage, ouvert en 125 à la pression atmosphérique et connecté en partie basse 126 par exemple tronconique, via une tubulure 127 d'alimentation gravitaire, à la capacité ou appareil concentrateur 128.

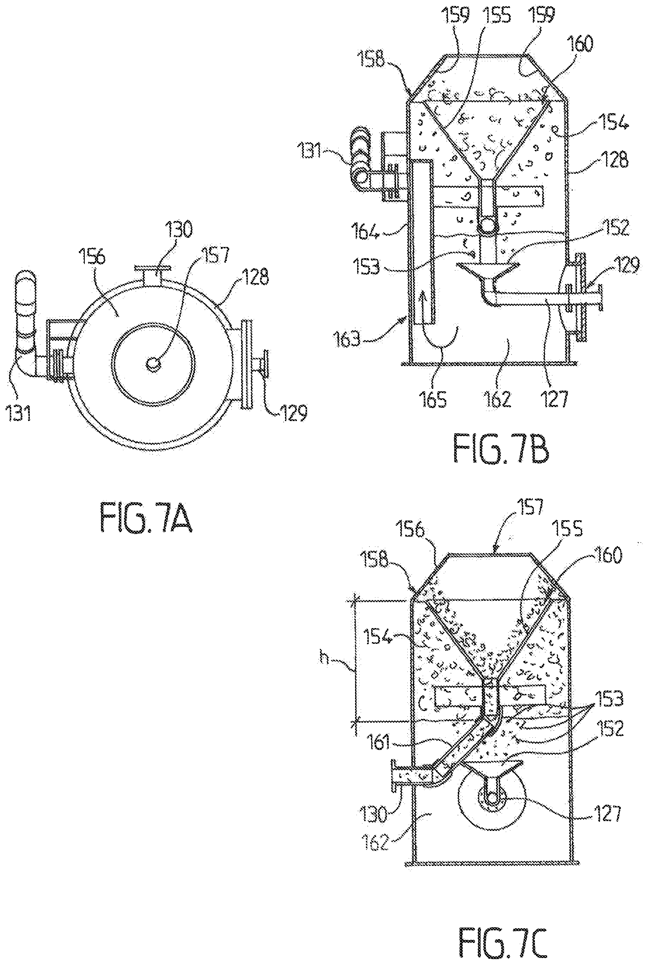

L'appareil concentrateur 128 sera décrit plus précisément en référence aux figures 7A à 7C. Il comporte, en plus de son alimentation en partie basse 129 par l'émulsion floculée issue de l'appareil dégazeur 124, une tubulure de sortie 130 de la boue épaissie et une tubulure 131 de sortie de l'eau transparente obtenue.

En fait, l'appareil concentrateur selon le mode de réalisation de l'invention décrit ici n'agit pas comme un flottateur classique dans la mesure où la pression du réacteur n'est pas suffisamment élevée et par voie de conséquence la taille des bulles d'air ne se situe pas dans le domaine micrométrique mais millimétrique.

Cette propriété confère à la boue une vitesse ascensionnelle remarquable.

La vitesse ascensionnelle observée est alors estimée supérieure à 50 m/h, pouvant atteindre 100 m/h voir même 200 m/h.

Le dispositif selon le mode de réalisation de l'invention plus particulièrement décrit ici va permettre de concentrer les boues digérées sortie digesteur, propres à être ensuite stockées dans une bâche à boues agitée avant centrifugation.

Cette configuration permet ainsi d'obtenir :

• Une meilleure siccité sortie centrifugeuse (dépassant 30 %).
• Une limitation des odeurs : le stockage de longue durée (supérieur à 4 semaines) de boues concentrées a montré une absence d'odeurs (H2S et NH3)
• La possibilité d'utiliser des centrifugeuses à plus petit débit et moindre coût.

En plus d'une réduction très sensible de la taille des outils de concentration, typiquement épaississeur statique ou mécanique (avec des performances bien supérieures et une absence d'odeurs conséquentes), l'invention ouvre donc des perspectives de réduction de taille des outils de filtration (typiquement centrifugeuse), limitant les investissements.

On a indiqué ci-après des exemples de lignes et de résultats sur des boues biologiques obtenues avec un dispositif tel que décrit en référence aux figures 4 et 5.

Exemple n° 1 : Caractéristiques des boues

• Les boues, sont constituées de boues primaires et des boues de lavage du biostyr (ajout de FeCl3 et polymère entrée multiflo) ;
• elles ont une siccité initiale de l'ordre de 35 g/l - 40 g/l;
• les boues ne décantent plus avec le temps Résultats après mise en oeuvre de l'intention :
• Le polymère Praestol 860 BS ajouté en l'état à raison de 1 kg/t de MS ;
• siccité : 85 g/l

Ces résultats montrent qu'il est possible de concentrer les boues digérées entrée digesteur de 50% permettant alors de :

• Augmenter très sensiblement la charge du digesteur par ajout de boues tiers
• Augmenter la production de biogaz et favoriser une mise sur le réseau économiquement viable (en plus d'être Développement Durable)
• Améliorer le fonctionnement de la centrifugeuse, qui fonctionnerait dans sa plage optimum de performance.

L'invention permet ainsi d'obtenir des performances remarquables de concentration de boues de 80 g/l à 100 g/l.

Le dispositif mis oeuvre est de plus très compact.

Ainsi un dispositif permettant de traiter 15 m3/h de boues a un encombrement au sol inférieur à 10m2 - un dispositif de 50 m3/h ne dépassera pas quant à lui 20 m2.

Exemple n° 2 :

Caractéristiques des boues.

Il s'agit de boues de MBR (Membrane biologique réacteur).

L'invention montre ici des performances pouvant atteindre 90g/l à partir d'une boue à 40 g/l.

TABLEAU 1

| Résultats de concentration boues digérées | | |
|---|---|---|
| Débit de boues M3 /h | MS (g/l) Norme Afnor | DCO sous nageant mg/l |
| 11 | 81,5 | 182 |
| 11,2 | 69 | 185 |
| 11,7 | 86 | 120 |
| 11,8 | 69 | 122 |
| 11,2 | 88 - 86 | 130 |
| 15,6 | 75 | ND |

TABLEAU 2

| Concentration des boues biologiques | | |
|---|---|---|
| Q boue | MS haut de flottation | MS Afnor sortie flottation |
| m3/h | g/l | g/l |
| 11, 99 | 107 | - |
| 6, 8 | - | 73 |
| 6, 1 | - | 69,8 |

débit boue moyen = 11,73 M3/h
MS BOUE=15,8 g/l en entrée
débit polymère= 635 l/h à 3,5 g/l
air= 57 Nm3/h
pression P interne au récipient =0,88 bar relatif

TABLEAU 3

| Paramètres analytiques | boue sortie bâche stockage | boue sortie concentrateur | égouttage sur panier de la boue sortie flottateur pendant 30 min |
|---|---|---|---|
| MS g /l | 15,8 | 79,4 | 111,4 |
| masse volumique en g/ cm$^3$ | 1,1 | 0,92 | 0,87 |

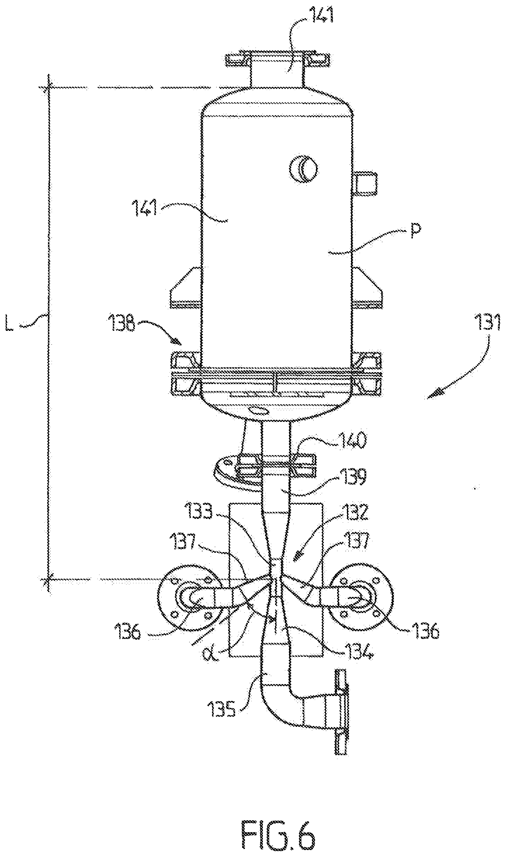

La figure 6 montre un autre mode de réalisation d'un récipient 131 selon l'invention.

La première zone 132 de petit volume est ici la partie centrale 133 d'un venturi 134 formé sur la tuyauterie 135 d'alimentation en boue, les injections d'air se faisant par deux tubulures 136 symétriques, injectant dans le sens du flux par exemple avec un angle α compris entre 20° et 90°, par exemple 30° via des rétrécissements tronconiques 137 se piquant sur la partie centrale 133.

La deuxième zone 138 du récipient est ici formée par une partie de tuyauterie 139 de la tuyauterie 135 d'alimentation de boue, connectée, par exemple au travers d'un diaphragme 140 pour régler la pression P, à une chambre cylindrique 141 de plus gros diamètre, par exemple dix fois le diamètre de la tuyauterie 135, l'ensemble des première et deuxième zones s'étendant sur une longueur L par exemple de 1 m avant sortie de l'émulsion obtenue par le haut de la chambre 141, via un piquage de jonction avec une vanne ou une soupape (non représentée).

Les figures 7A à 7C montrent l'appareil concentrateur 128 de la figure 5.

Celui-ci comprend une cuve cylindrique 128 munie d'une arrivée d'émulsion par la tuyauterie 127, coudée, centrée à l'intérieur de la cuve à un niveau correspondant au tiers de la hauteur de la cuve.

La tuyauterie est coudée à 90° et se termine par une sortie en entonnoir 152 évasé vers le haut pour permettre la montée des bulles de boues 153 qui constituent une couche 154 de hauteur h réglable en fonction du débit.

La boue monte dans la cuve à une vitesse de l'ordre de 50 m/s et se déverse dans un entonnoir central 155 conique.

La face supérieure 156 de la cuve est en cône inversé ouvert en son centre 157 pour laisser l'air se dégager et permettre une compression de la boue en 158 entre la face interne 159 du cône inversé et le bord supérieur 160 de la périphérie de l'entonnoir.

La boue se déverse alors dans l'entonnoir et est évacuée en partie basse pour gravité via un tube coudée 161 terminé par la tubulaire 130.

L'eau claire 162 est quant à elle évacuée en partie basse 163 de la cuve via un tube 164 vertical permettant le siphonage (flèche 165) et la sortie en partie haute par la turbulence 131.

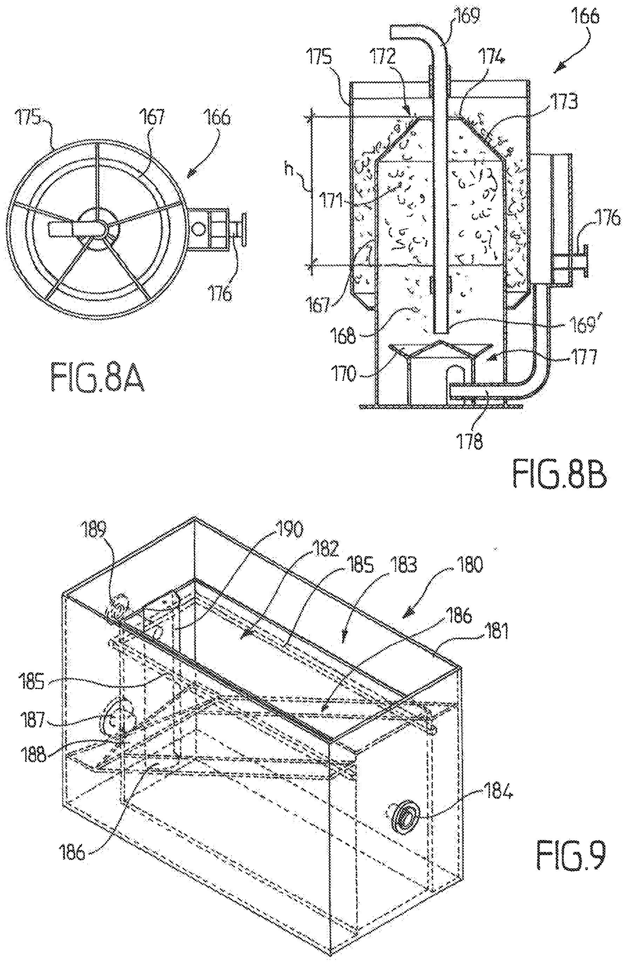

On a représenté sur les figures 8A et 8B un autre mode de réalisation d'un appareil concentrateur 166 utilisable selon une variante de l'invention.

Il comprend une cuve cylindrique 167 alimentée en boue 168 par le haut via une tubulure 169 plongeante et centrée avec une extrémité 169 par exemple située au tiers ou au quart de la hauteur de la cuve.

Une plaque 170 de déviation permet la remontée de la boue à grande vitesse pour constituer un bouchon 171 de boue qui sort en partie haute 172 de la cuve comprenant une extrémité de sortie 173 en forme de tronc de cône, la boue s'évacuant par déversoir le long du bord périphérique 174 dans un réservoir annulaire 175 périphérique puis via une tubulure de sortie 176 en partie basse dudit réservoir annulaire.

L'eau 177 qui reste en partie basse est quant à elle évacuée via une turbulence de sortie 178.

Ici encore on peut régler la hauteur de la couche de boue, et donc son tassement et sa siccité via le réglage des débits et des dimensions nominales des éléments de cuve.

La figure 9 montre un autre mode de réalisation d'un appareil concentrateur 180 formé par une cuve 181 parallélépipédique munie en son centre d'une chambre interne 182 également parallélépipédique définissant un espace 183 entre les parois internes de la cuve 181 et externes de la chambre 182.

La boue arrive en partie médiane 184 de la chambre, monte par flottation en créant un bouchon de boue d'épaisseur constante et se déverse sur la périphérie 185 de la chambre dans la partie 183 périphérique annulaire entre les parois de la chambre et de la cuve.

Elle est récupérée par le biais de pans coupés 186 par exemple à 30° et évacuée en 187 en partie basse par le biais d'un fond 189 collecteur par exemple en forme de prisme.

L'eau est quant à elle évacuée en 189 par un orifice de sortie situé en partie haute d'un canal collecteur 190 vertical, fonctionnant comme une colonne d'eau de siphon.

Comme il va de soi et comme il résulte également de ce qui précède, la présente invention n'est pas limitée aux modes de réalisation plus particulièrement décrits. Elle en embrasse au contraire toutes les variantes et notamment celles où on utilise plusieurs dispositifs les uns à la suite des autres.

## Revendications

**1.** Procédé de traitement et de conditionnement de boues liquides (2, 31), dans lequel on crée une première émulsion (14, 57, 89) de boue dans un récipient (5, 6, 33, 52, 83, 117, 119, 131) en ligne pressurisé alimenté par la boue en continu à un premier débit Q (m3/h), par choc de la boue (2, 31, 81) avec de l'air (13) injecté dans le récipient (5) à un débit Q' (Nm3/h), avec Q' > 5Q, on réalise l'évacuation de ladite première émulsion à la sortie du récipient via un organe (18, 38, 61) générant une perte de charge puis on effectue la filtration ou la décantation des matières en suspension de l'émulsion (23) ainsi obtenue en les séparant de la partie liquide (27, 49, 105, 112) que l'on vide en continu,

**caractérisé en ce que**

pour créer ladite première émulsion par choc de la boue avec de l'air on injecte à boue (2) et l'air (13) dans une première zone (8, 56, 84, 117, 133) du récipient, et on évacue l'émulsion ainsi formée vers une deuxième zone (16, 59, 91, 119, 141) du récipient s'étendant sur une première longueur déterminée $L_1$, l'injection d'air et de boue dans la première zone et la longueur $L_1$ étant propres à constituer ladite première émulsion formée de gouttes de boue dans l'air,
puis on réalise ladite évacuation de la première émulsion du récipient, via l'organe générant une perte de charge dans une enceinte tubulaire (19, 43, 62, , 121) s'étendant sur une seconde longueur déterminée $L_2$, dans laquelle on injecte au moins un floculant (22, 45, 73, 98, 123), pour obtenir dans ladite enceinte une deuxième émulsion d'air dans la boue coagulée et floculée,
et **en ce qu'**on dégaze (20, 46, 67) ladite deuxième émulsion au moins en partie par mise à l'atmosphère (20) de l'enceinte avant ladite filtration (25, 25') ou décantation.

2. Procédé selon la revendication 1 **caractérisé en ce que** la première zone est d'un petit volume inférieur à 0,05 m$^3$.

3. Procédé selon l'une quelconque des revendications précédentes, **caractérisé en ce que** la première longueur déterminée $L_1$ est supérieure à 50 cm.

4. Procédé selon la revendication 3, **caractérisé en ce que** la deuxième longueur déterminée $L_2$ est supérieure à 1 m.

5. Procédé selon l'une quelconque des revendications précédentes, **caractérisé en ce que** la pression moyenne P dans le récipient (5, 33) est telle que 1,5 bars < P < 10 bars et Q' est tel que 10 Q $\leq$ Q' $\leq$ 100 Q.

6. Procédé selon l'une quelconque des revendications précédentes, **caractérisé en ce que** on dégaze fortement l'émulsion à la sortie du récipient, à l'intérieur d'une chambre (95, 124) de dégazage munie de moyens (96) de brassage.

7. Procédé selon l'une quelconque des revendications précédentes, **caractérisé en ce que** le récipient (8) en ligne est une colonne (6) de diamètre moyen $d$ et de hauteur H $\geq$ 10 $d$, la boue (2) étant introduite en partie basse (10) de la colonne dans le lit gazeux créé par l'air injecté au niveau de ladite alimentation en boue.

8. Procédé selon la revendication 7, **caractérisé en ce qu'**on projette la boue liquide (2) dans la colonne (6) sur une paroi (11) ou un écran interne du récipient pour améliorer l'éclatement de celle-ci dans le flux gazeux.

9. Procédé selon l'une quelconque des revendications précédentes, caractérisé en ce on introduit la boue (2) en partie basse (10) du récipient (5, 6) via un mélangeur statique.

10. Procédé selon l'une quelconque des revendications précédentes, **caractérisé en ce que** le floculant (22, 45, 73) est un polymère injecté en sortie immédiate du récipient, avant la mise à l'atmosphère.

11. Procédé selon l'une quelconque des revendications précédentes, **caractérisé en ce que** on introduit en amont du récipient (6) dans le flux de boue au moins un réactif pris parmi le sable, le carbonate de calcium, la chaux éteinte, les réactifs d'oxydation et/ou les réactifs d'aide à la coagulation.

12. Procédé selon l'une quelconque des revendications précédentes, **caractérisé en ce que** on introduit en aval du récipient au moins un réactif pris parmi le sable, le carbonate de calcium, la chaux éteinte, les réactifs d'oxydation et/ou les réactifs d'aide à la coagulation.

13. Procédé selon l'une quelconque des revendications précédentes, **caractérisé en ce que** l'enceinte (19, 62, 94) est tubulaire et de section moyenne de passage équivalente à celle du récipient.

14. Procédé selon la revendication 13, **caractérisé en ce que** l'enceinte comprend au moins un élément (18, 61, 97) générateur d'une perte de charge en aval de la sortie du récipient (6, 52), à la sortie duquel on injecte le floculant.

15. Procédé selon la revendication 14, **caractérisé en ce que** l'enceinte comprend au moins un deuxième élément générateur d'une perte de charge avant le premier élément générateur, à la sortie duquel on introduit au moins un réactif et/ ou de l'air.

16. Procédé selon l'une quelconque des revendications précédentes, **caractérisé en ce que** le ou les éléments générateurs de perte de charge sont des venturis (18, 38, 44, 64).

17. Procédé selon l'une quelconque des revendications précédentes, caractérisé en ce on effectue une concentration rapide et/ou sensiblement instantanée des boues par flottation/tassement de l'émulsion floculée dans une capacité (101, 128, 166, 180) faisant office de concentrateur.

18. Procédé selon la revendication 17, caractérisé en ce la boue est évacuée par surverse du concentrateur.

19. Procédé selon l'une quelconque des revendications précédentes, **caractérisé en ce qu'**on effectue un traitement des boues en aval de l'enceinte tubulaire par centrifugation, filtration et/ou pressage.

20. Procédé selon l'une quelconque des revendications précédentes, **caractérisé en ce que** l'air injecté est chauffé et/ou mélangé à de la vapeur d'eau.

21. Procédé selon l'une quelconque des revendications précédentes, **caractérisé en ce que** l'air est injecté pour former un écoulement hélicoïdal dans le flux de boue.

22. Dispositif de traitement et de conditionnement de boues liquides comportant un récipient (5, 6, 33, 52, 83, 117, 119, 131) en ligne,
des moyens (3, 82) d'alimentation en boue (2, 31) dudit récipient en continu à un premier débit Q (m3/h),
des moyens (87) d'alimentation dudit récipient en air à un débit Q'(Nm3/h), avec Q' > 5Q, et
des moyens (25, 25', 68) de filtration et/ou de décantation de l'émulsion ainsi floculée agencés pour séparer la partie liquide des matières en suspension et la récupérer en continu,
**caractérisé en ce que**
les moyens (3, 82) d'alimentation en boue et en air du récipient sont agencés pour injecter la boue et l'air dans une première zone du récipient puis pour véhiculer le mélange sur une première longueur $L_1$ pour former une première émulsion de gouttes de boue dans l'air,
**en ce que** il comprend une enceinte (19, 39, 62, 93, 121) d'évacuation de la première émulsion obtenue dans le récipient via un organe (18, 38, 61) générant une perte de charge, l'enceinte (19, 39, 62) étant tubulaire s'étendant sur une longueur déterminée $L_2$, comprenant des moyens de mise à l'atmosphère et des moyens (21, 72, 98, 123) d'injection d'au moins un floculant (22, 45, 73) dans ladite enceinte tubulaire en amont par rapport à ladite mise à l'atmosphère, de façon à former une deuxième émulsion d'air dans la boue coagulée et floculée.

23. Dispositif selon la revendication 22, **caractérisé en ce que** la première zone du récipient est de petit volume inférieur à 0,05 m³ confiné entre deux parois de passage.

24. Dispositif selon l'une quelconque des revendications 22 et 23, **caractérisé en ce que** le récipient (5, 33, 52) en ligne est une colonne (6) de diamètre moyen d et de hauteur H ≥ 10 d, la boue étant introduite en partie basse (10) de la colonne dans le lit gazeux créé par l'air injecté au niveau de ladite alimentation en boue.

25. Dispositif selon la revendication 24, **caractérisé en ce que** la colonne (6) comporte de plus un écran interne disposé à la sortie des moyens d'injection dans la colonne, pour éclatement du jet de boue.

26. Dispositif selon l'une quelconque des revendications 22 à 25, **caractérisé en ce qu'**il comprend un mélangeur statique de la boue en amont du récipient.

27. Dispositif selon l'une quelconque des revendications 22 à 26, **caractérisé en ce que** l'enceinte (19, 62, 94) est tubulaire de section moyenne de passage équivalente à celle du récipient.

28. Dispositif selon la revendication 27, **caractérisé en ce que** l'enceinte tubulaire (16) comprend au moins un élément (18, 44, 61) générateur d'une perte de charge en aval de la sortie du récipient, à la sortie duquel on injecte le floculant.

29. Dispositif selon la revendication 28, **caractérisé en ce que** l'enceinte tubulaire comprend au moins un deuxième élément (38) générateur d'une perte de charge avant le premier élément générateur, à la sortie duquel on introduit (42) au moins un réactif et/ ou de l'air.

30. Dispositif selon l'une quelconque des revendications 28 et 29, **caractérisé en ce que** le ou les éléments générateurs de perte de charge sont des venturis.

31. Dispositif selon l'une quelconque des revendications précédentes 22 à 30, **caractérisé en ce qu'**il comporte de plus une chambre (95, 124) de dégazage en aval du récipient muni de moyens (96) de brassage.

**32.** Dispositif selon l'une des revendications 22 à 31, **caractérisé en ce qu'**il comporte de plus une capacité (101, 128, 166, 180) en aval de l'enceinte faisant office de concentrateur agencé pour permettre la flottation de la boue floculée sur une hauteur déterminée.

**33.** Dispositif selon la revendication 32, **caractérisé en ce que** la capacité comprend des moyens (107 ; 159, 160 ; 173, 174) d'évacuation de la boue par surverse.

**34.** Galette de boue organique solidifiée obtenue par le procédé selon l'une quelconque des revendications 1 à 21, **caractérisée en ce que** elle est formée à partir d'une boue organique et **en ce qu'**elle est de masse volumique comprise entre 0,5 et 0,9 g/cm$^3$.

**35.** Galette de boue organique selon la revendication 34, **caractérisé en ce qu'**elle est de porosité égale à 85 % $\pm$ 5 %.

**Patentansprüche**

**1.** Verfahren zur Behandlung und Aufbereitung von flüssigen Schlämmen (2, 31), bei dem eine erste Schlammemulsion (14, 57, 89) in einem Inline-Druckbehälter (5, 6, 33, 52, 83, 117, 119, 131), der kontinuierlich mit dem Schlamm mit einem ersten Durchfluss Q (m3/h) durch Zusammenstoß des Schlamms (2, 31, 81) mit in den Behälter (5) mit einem Durchfluss Q' (Nm3/h) mit Q' > 5Q gespeister Luft (13) beaufschlagt wird, die erste Emulsion am Ausgang des Behälters über ein einen Druckverlust erzeugendes Organ (18, 38, 61) abgeführt wird, und anschließend die Filterung oder das Absetzen der Schwebstoffe der derart erzielten Emulsion (23) erfolgt, indem sie von dem kontinuierlich abgeführten flüssigen Anteil (27, 49, 105, 112) getrennt wird,
**dadurch gekennzeichnet,**
**dass** zur Erzeugung der ersten Emulsion durch Zusammenstoß des Schlammes mit Luft der Schlamm (2) und die Luft (13) in einen ersten Bereich (8, 56, 84, 117, 133) des Behälters gespeist werden und die derart gebildete Emulsion zu einem zweiten Bereich (16, 59, 91, 119, 141) des Behälters abgeführt wird, der sich auf einer ersten bestimmten Länge L1 erstreckt, wobei die Luft- und Schlammspeisung in den ersten Bereich und die Länge L1 geeignet sind, die erste aus Schlammtropfen in der Luft gebildeten Emulsion zu bilden, anschließend das Abführen der ersten Emulsion aus dem Behälter über das einen Druckverlust erzeugende Organ in eine rohrförmige Kammer (19, 43, 62" 121), die sich auf einer zweiten bestimmten Länge L2 erstreckt und in die mindestens ein Flockungsmittel (22, 45, 73, 98, 123) gespeist wird, um in der Kammer eine zweite Emulsion aus Luft im koagulierten und flokkulierten Schlamm zu erzielen, und
**dass** die zweite Emulsion zumindest teilweise durch Entlüftung (20) der Kammer vor der Filterung (25, 25') oder vor dem Absetzen entgast wird (20, 46, 67).

**2.** Verfahren nach Anspruch 1,
**dadurch gekennzeichnet,**
**dass** der erste Bereich ein kleines Volumen geringer als 0,05 m$^3$ aufweist.

**3.** Verfahren nach einem beliebigen der vorhergehenden Ansprüche,
**dadurch gekennzeichnet,**
**dass** die erste bestimmte Länge L1 größer als 50 cm ist.

**4.** Verfahren nach Anspruch 3,
**dadurch gekennzeichnet,**
**dass** die zweite bestimmte Länge größer als 1 m ist.

**5.** Verfahren nach einem beliebigen der vorhergehenden Ansprüche,
**dadurch gekennzeichnet,**
**dass** der durchschnittliche Druck P in dem Behälter (5, 33) derart ist, dass 1,5 bar < P < 10 bar und Q' derart ist, dass 10 Q $\leq$ Q' $\leq$ 100 Q.

**6.** Verfahren nach einem beliebigen der vorhergehenden Ansprüche,
**dadurch gekennzeichnet,**
**dass** die Emulsion am Ausgang des Behälters innerhalb einer mit Rührmitteln (96) versehenen Entgasungskammer (95, 124) stark entgast wird.

**7.** Verfahren nach einem beliebigen der vorhergehenden Ansprüche,
**dadurch gekennzeichnet,**
**dass** der Inline-Behälter (8) eine Säule (6) mit einem durchschnittlichen Durchmesser d und einer Höhe H ≥ 10 d ist, wobei der Schlamm (2) in den unteren Teil (10) der Säule in das Gasbett eingeführt wird, das durch die auf der Ebene der Schlammspeisung gespeisten Luft erzeugt wird.

**8.** Verfahren nach Anspruch 7,
**dadurch gekennzeichnet,**
**dass** der flüssige Schlamm (2) in die Säule (6) gegen eine Wand (11) oder eine interne Blende des Behälters geworfen wird, um seine Verteilung in dem Gasfluss zu verbessern.

**9.** Verfahren nach einem beliebigen der vorhergehenden Ansprüche,
**dadurch gekennzeichnet,**
**dass** der Schlamm (2) in den unteren Teil (10) des Behälters (5, 6) über einen statischen Mischer eingeführt wird.

**10.** Verfahren nach einem beliebigen der vorhergehenden Ansprüche,
**dadurch gekennzeichnet,**
**dass** das Flockungsmittel (22, 45, 73) ein Polymer ist, das unmittelbar am Ausgang des Behälters vor der Entlüftung eingespeist wird.

**11.** Verfahren nach einem beliebigen der vorhergehenden Ansprüche,
**dadurch gekennzeichnet,**
**dass** vor dem Behälter (6) mindestens ein Reagens aus der Gruppe bestehend aus Sand, Kalziumkarbonat, Löschkalk, den Oxidierungsreagenzien und/oder Koagulationshilfsreagenzien eingeführt wird.

**12.** Verfahren nach einem beliebigen der vorhergehenden Ansprüche,
**dadurch gekennzeichnet,**
**dass** nach dem Behälter mindestens ein Reagens aus der Gruppe bestehend aus Sand, Kalziumkarbonat, Löschkalk, den Oxidierungsreagenzien und/oder Koagulationshilfsreagenzien eingeführt wird.

**13.** Verfahren nach einem beliebigen der vorhergehenden Ansprüche,
**dadurch gekennzeichnet,**
**dass** die Kammer (19, 62, 94) rohrförmig ist und einen durchschnittlichen Durchflussquerschnitt aufweist, der demjenigen des Behälters entspricht.

**14.** Verfahren nach Anspruch 13,
**dadurch gekennzeichnet,**
**dass** die Kammer mindestens ein Element (18, 61, 97) aufweist, das einen Druckverlust nach dem Ausgang des Behälters (6, 52) erzeugt und an dessen Ausgang das Flockungsmittel gespeist wird.

**15.** Verfahren nach Anspruch 14,
**dadurch gekennzeichnet,**
**dass** die Kammer mindestens ein zweites Element aufweist, das einen Druckverlust vor dem ersten erzeugenden Element erzeugt und an dessen Ausgang mindestens ein Reagenz und/oder Luft eingeführt werden.

**16.** Verfahren nach einem beliebigen der vorhergehenden Ansprüche,
**dadurch gekennzeichnet,**
**dass** das bzw. die einen Druckverlust erzeugenden Elemente Venturirohre (18, 38, 44, 64) sind.

**17.** Verfahren nach einem beliebigen der vorhergehenden Ansprüche,
**dadurch gekennzeichnet,**
**dass** die Schlämme schnell und/oder im Wesentlichen sofort durch Flotation/Setzung der flokkulierten Emulsion in einem Aufnahmevolumen (101, 128, 166, 180) konzentriert werden, das als Konzentrator dient.

**18.** Verfahren nach Anspruch 17,
**dadurch gekennzeichnet,**
**dass** der Schlamm durch Überlauf des Konzentrators abgeführt wird.

**19.** Verfahren nach einem beliebigen der vorhergehenden Ansprüche,
**dadurch gekennzeichnet,**
**dass** die Schlämme vor der rohrförmigen Kammer durch Zentrifugieren, Filtrieren und/oder Pressen behandelt werden.

**20.** Verfahren nach einem beliebigen der vorhergehenden Ansprüche,
**dadurch gekennzeichnet,**
**dass** die gespeiste Luft geheizt und/oder mit Wasserdampf vermischt wird.

**21.** Verfahren nach einem beliebigen der vorhergehenden Ansprüche,
**dadurch gekennzeichnet,**
**dass** die Luft gespeist wird, um in dem Schlammfluss eine spiralförmige Strömung zu bilden.

**22.** Vorrichtung zur Behandlung und Aufbereitung von flüssigen Schlämmen, umfassend:

- einen Inline-Behälter (5, 6, 33, 52, 83, 117, 119, 131),
- Mittel (3, 82) für die kontinuierliche Speisung des Behälters mit Schlamm (2, 31) bei einem ersten Durchfluss Q (m3/h),
- Mittel (87) für die Speisung des Behälters mit Luft bei einem Durchfluss Q' (Nm3/h) mit Q' > 5Q und
- Mittel (25, 25', 68) für die Filtrierung und/oder die Trennung der derart flokkulierten Emulsion, welche angeordnet sind, um den flüssigen Anteil der Schwebstoffe kontinuierlich abzutrennen und aufzufangen,

**dadurch gekennzeichnet,**
**dass** die Mittel (3, 82) für die Speisung des Behälters mit Schlamm und mit Luft angeordnet sind, um den Schlamm und die Luft in einen ersten Bereich des Behälters zu speisen, anschließend um das Gemisch auf einer ersten Länge L1 zu befördern, um eine erste Emulsion aus Schlammtropfen in der Luft zu bilden,
sie eine Kammer (19, 39, 62, 93, 121) umfasst, um die erste in dem Behälter erzielten Emulsion über ein Organ (18, 38, 61) abzuführen, das einen Druckverlust erzeugt, wobei die Kammer (19, 39, 62) rohrförmig ist, sich auf einer bestimmten Länge L2 erstreckt, Entlüftungsmittel und Mittel (21, 72, 98, 123) für die Speisung mindestens eines Flockungsmittels (22, 45, 73) in die rohrförmige Kammer vor der Entlüftung umfasst, so dass eine zweite Emulsion aus Luft in dem koagulierten und flokkulierten Schlamm gebildet wird.

**23.** Vorrichtung nach Anspruch 22,
**dadurch gekennzeichnet,**
**dass** der erste Bereich des Behälters ein kleines Volumen geringer als 0,05 m$^3$ aufweist, das zwischen zwei Durchführwände begrenzt ist.

**24.** Vorrichtung nach einem beliebigen der Ansprüche 22 und 23,
**dadurch gekennzeichnet,**
**dass** der Inline-Behälter (5, 33, 52) eine Säule (6) mit einem durchschnittlichen Durchmesser d und einer Höhe H ≥ 10 d ist, wobei der Schlamm in den unteren Teil (10) der Säule in das Gasbett eingeführt wird, das durch die auf der Ebene der Schlammspeisung gespeisten Luft erzeugt wird.

**25.** Vorrichtung nach Anspruch 24,
**dadurch gekennzeichnet,**
**dass** die Säule (6) ferner eine interne Blende aufweist, die für die Verteilung des Schlammstrahls am Ausgang der Mittel für die Speisung in die Säule angeordnet ist.

**26.** Vorrichtung nach einem beliebigen der Ansprüche 22 bis 25,
**dadurch gekennzeichnet,**
**dass** sie einen statischen Mischer für den Schlamm vor dem Behälter aufweist.

**27.** Vorrichtung nach einem beliebigen der Ansprüche 22 bis 26,
**dadurch gekennzeichnet,**
**dass** die Kammer (19, 62, 94) rohrförmig ist und einen durchschnittlichen Durchflussquerschnitt aufweist, der demjenigen des Behälters entspricht.

**28.** Vorrichtung nach Anspruch 27,

**dadurch gekennzeichnet,**
**dass** die rohrförmige Kammer (16) mindestens ein Element (18, 44, 61, 97) aufweist, das einen Druckverlust nach dem Ausgang des Behälters erzeugt und an dessen Ausgang das Flockungsmittel gespeist wird.

**29.** Vorrichtung nach Anspruch 28,
**dadurch gekennzeichnet,**
**dass** die Kammer mindestens ein zweites Element (38) aufweist, das einen Druckverlust vor dem ersten erzeugenden Element erzeugt und an dessen Ausgang mindestens ein Reagenz und/oder Luft eingeführt werden (42).

**30.** Vorrichtung nach einem beliebigen der Ansprüche 28 und 29,
**dadurch gekennzeichnet,**
**dass** das bzw. die einen Druckverlust erzeugenden Elemente Venturirohre sind.

**31.** Vorrichtung nach einem beliebigen der vorhergehenden Ansprüche 22 bis 30,
**dadurch gekennzeichnet,**
**dass** sie ferner eine Entgasungskammer (95, 124) nach dem mit Rührmitteln (96) versehenen Behälter aufweist.

**32.** Vorrichtung nach einem der Ansprüche 22 bis 31,
**dadurch gekennzeichnet,**
**dass** sie ferner ein Aufnahmevolumen (101, 128, 166, 180) nach der Kammer aufweist, das als Konzentrator dient, welcher angeordnet ist, um die Flotation des flokkulierten Schlamms auf einer bestimmten Höhe zu ermöglichen.

**33.** Vorrichtung nach Anspruch 32,
**dadurch gekennzeichnet,**
**dass** das Aufnahmevolumen Mittel (107 ; 159, 160 ; 173, 174) für das Abführen des Schlamms durch Überlauf aufweist.

**34.** Filterkuchen aus verfestigtem organischem Schlamm, welcher durch das Verfahren nach einem beliebigen der Ansprüche 1 bis 21 erzielt wird,
**dadurch gekennzeichnet,**
**dass** er aus einem organischen Schlamm gebildet wird und dass er ein Raumgewicht zwischen 0,5 und 0,9 g/cm$^3$ aufweist.

**35.** Organischer Filterkuchen nach Anspruch 34,
**dadurch gekennzeichnet,**
**dass** er eine Porosität von 85 % $\pm$ 5 % aufweist.

**Claims**

**1.** Method for the treatment and processing of slurry (2, 31), in which a first slurry emulsion (14, 57, 89) is created in a pressurised in-line receptacle (5, 6, 33, 52, 83, 117, 119, 131) supplied with the slurry continuously at a first flow rate Q (m3/h), by collision of the slurry (2, 31, 81) with air (13) injected into the receptacle (5) at a flow rate Q' (Nm3/h), where Q' > 5Q, evacuation of said first emulsion is carried out at the outlet of the receptacle via a component (18, 38, 61) which generates a loss of pressure, then filtration or decanting of the suspended matter of the emulsion (23) thus obtained is carried out by separating it from the liquid fraction (27, 49, 105, 112) which is continuously emptied, **characterised in that**, in order to create said first emulsion by collision of the slurry with air, the slurry (2) and the air (13) are injected into a first zone (8, 56, 84, 117, 133) of the receptacle, and the emulsion thus formed is evacuated towards a second zone (16, 59, 91, 119, 141) of the receptacle extending over a first given length L$_1$, the injection of air and slurry into the first zone and the length L$_1$ being conducive to forming said first emulsion composed of drops of slurry in air, then said evacuation of the first emulsion from the receptacle is carried out, via the component which generates a loss of pressure in a tubular enclosure (19, 43, 62, , 121) extending over a second given length L$_2$, into which at least one flocculant (22, 45, 73, 98, 123) is injected, in order to obtain in said enclosure a second emulsion of air in the coagulated and flocculated slurry, and **in that** said second emulsion is at least partially degassed (20, 46, 67) by venting (20) of the enclosure before said filtration (25, 25') or decanting.

**2.** Method according to claim 1, **characterised in that** the first zone has a small volume less than 0.05 m$^3$.

3. Method according to any one of the preceding claims, **characterised in that** the first given length $L_1$ is greater than 50 cm.

4. Method according to claim 3, **characterised in that** the second given length $L_2$ is greater than 1 m.

5. Method according to any one of the preceding claims, **characterised in that** the mean pressure P in the receptacle (5, 33) is such that 1.5 bars < P < 10 bars and Q' is such that $10\ Q \leq Q' \leq 100\ Q$.

6. Method according to any one of the preceding claims, **characterised in that** the emulsion is substantially degassed at the outlet of the receptacle, in the interior of a degassing chamber (95, 124) provided with agitating means (96).

7. Method according to any one of the preceding claims, **characterised in that** the in-line receptacle (8) is a column (6) of mean diameter $\underline{d}$ and height $H \geq 10\ \underline{d}$, the slurry (2) being introduced into the lower part (10) of the column in the gaseous bed created by the air injected at the level of said slurry feed.

8. Method according to claim 7, **characterised in that** the slurry (2) in the column (6) is sprayed onto an inner wall (11) or screen of the receptacle in order to improve its break-up in the gaseous flux.

9. Method according to any one of the preceding claims, **characterised in that** the slurry (2) is introduced into the lower part (10) of the receptacle (5, 6) via a static mixer.

10. Method according to any one of the preceding claims, **characterised in that** the flocculant (22, 45, 73) is a polymer injected into the immediate outlet of the receptacle, before venting.

11. Method according to any one of the preceding claims, **characterised in that** at least one reagent selected from among sand, calcium carbonate, slaked lime, oxidation reagents and/or coagulation-promoting reagents is introduced upstream of the receptacle (6) into the slurry flux.

12. Method according to any one of the preceding claims, **characterised in that** at least one reagent selected from among sand, calcium carbonate, slaked lime, oxidation reagents and/or coagulation-promoting reagents is introduced downstream of the receptacle.

13. Method according to any one of the preceding claims, **characterised in that** the enclosure (19, 62, 94) is tubular and has a mean flow cross-section equivalent to that of the receptacle.

14. Method according to claim 13, **characterised in that** the enclosure comprises at least one element (18, 61, 97) which generates a loss of pressure downstream of the outlet of the receptacle (6, 52), at the outlet of which the flocculant is injected.

15. Method according to claim 14, **characterised in that** the enclosure comprises at least one second element which generates a loss of pressure before the first generating element, at the outlet of which at least one reagent and/or air is introduced.

16. Method according to any one of the preceding claims, **characterised in that** the element or elements which generate a loss of pressure are Venturi tubes (18, 38, 44, 64).

17. Method according to any one of the preceding claims, **characterised in that** rapid and/or substantially instantaneous concentration of the slurry is carried out by flotation/settling of the flocculated emulsion in a volume (101, 128, 166, 180) acting as a concentrator.

18. Method according to claim 17, **characterised in that** the slurry is evacuated by overflow of the concentrator.

19. Method according to any one of the preceding claims, **characterised in that** treatment of the slurry downstream of the tubular enclosure is carried out by centrifuging, filtration and/or pressing.

20. Method according to any one of the preceding claims, **characterised in that** the injected air is heated and/or mixed with steam.

21. Method according to any one of the preceding claims, **characterised in that** the air is injected to form a helical flow in the slurry flux.

22. Device for the treatment and processing of slurry comprising an in-line receptacle (5, 6, 33, 52, 83, 117, 119, 131), means (3, 82) for continuously supplying said receptacle with slurry (2, 31) at a first flow rate Q (m3/h), means (87) for supplying said receptacle with air at a flow rate Q' (Nm3/h), where Q' > 5Q, and means (25, 25', 68) for filtering and/or decanting the emulsion thus flocculated, arranged so as to separate the liquid fraction of the suspended matter and recover it continuously, **characterised in that** the means (3, 82) for supplying the receptacle with slurry and air are arranged so as to inject the slurry and air into a first zone of the receptacle, then to transport the mixture over a first length $L_1$ to form a first emulsion of drops of slurry in air, **in that** it comprises an enclosure (19, 39, 62, 93, 121) for evacuating the first emulsion obtained in the receptacle via a component (18, 38, 61) which generates a loss of pressure, the enclosure (19, 39, 62) being tubular and extending over a given length $L_2$, comprising venting means and means (21, 72, 98, 123) for injecting at least one flocculant (22, 45, 73) into said tubular enclosure upstream in relation to said venting, so as to form a second emulsion of air in the coagulated and flocculated slurry.

23. Device according to claim 22, **characterised in that** the first zone of the receptacle has a small volume less than 0.05 m$^3$ confined between two flow walls.

24. Device according to either one of claims 22 and 23, **characterised in that** the in-line receptacle (5, 33, 52) is a column (6) of mean diameter $\underline{d}$ and height H $\geq$ 10 $\underline{d}$, the slurry being introduced into the lower part (10) of the column in the gaseous bed created by the air injected at the level of said slurry feed.

25. Device according to claim 24, **characterised in that** the column (6) further comprises an internal screen disposed at the outlet of the means for injection into the column, for breaking up the jet of slurry.

26. Device according to any one of claims 22 to 25, **characterised in that** it comprises a static mixer for the slurry upstream of the receptacle.

27. Device according to any one of claims 22 to 26, **characterised in that** the enclosure (19, 62, 94) is tubular with a mean flow cross-section equivalent to that of the receptacle.

28. Device according to claim 27, **characterised in that** the tubular enclosure (16) comprises at least one element (18, 44, 61, 97) which generates a loss of pressure downstream of the outlet of the receptacle, at the outlet of which the flocculant is injected.

29. Device according to claim 28, **characterised in that** the tubular enclosure comprises at least one second element (38) which generates a loss of pressure before the first generating element, at the outlet of which at least one reagent and/or air is introduced (42).

30. Device according to either one of claims 28 and 29, **characterised in that** the element or elements which generate a loss of pressure are Venturi tubes.

31. Device according to any one of the preceding claims 22 to 30, **characterised in that** it further comprises a degassing chamber (95, 124) downstream of the receptacle provided with agitating means (96).

32. Device according to one of claims 22 to 31, **characterised in that** it further comprises a volume (101, 128, 166, 180) downstream of the enclosure acting as a concentrator arranged so as to allow flotation of the flocculated slurry at a given height.

33. Device according to claim 32, **characterised in that** the volume comprises means (107; 159, 160; 173, 174) for evacuating the slurry by overflow.

34. Solidified organic slurry cake obtained by the method according to any one of claims 1 to 21, **characterised in that** it is formed from an organic slurry and **in that** it has a density of between 0.5 and 0.9 g/cm$^3$.

35. Organic slurry cake according to claim 34, **characterised in that** it has a porosity equal to 85% $\pm$ 5%.

FIG.1

FIG.2

FIG.3

FIG.4

EP 3 094 393 B1

EP 3 094 393 B1

FIG.5A

FIG.5B

FIG.5C

FIG.6

FIG.7A

FIG.7B

FIG.7C

FIG.8A

FIG.8B

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2729383
- FR 2966818